# EUROPEAN PATENT APPLICATION

(11) **EP 4 755 773 A1**
(43) Date of publication of application: **10.06.2026**
(21) Application number: 25220480.5
(22) Date of filing: 03.12.2025
(51) Int. Cl.: B62J 27/00, B62J 29/00, B62J 50/22, B62J 45/41, B62J 45/422, B60R 1/26, B60R 1/30, G01S 13/86

(54) **RADAR ELECTRONIC REARVIEW MIRROR SYSTEM FOR BICYCLES**

(30) Priority: 09.12.2024 US 202463729787 P; 29.04.2025 TW 114204293 U
(71) Applicant: Terasilic Co., Ltd., 231 New Taipei City Xindian Dist. (TW)
(72) Inventor: YU, Shih-An, 231 NEW TAIPEI CITY (TW)
(74) Representative: Slingsby Partners LLP

(57) **Abstract**

A radar electronic rearview mirror system (10; 10A) for bicycles is provided with an environment sensing module (11), a display module (12), and a light sensing module (13). The environment sensing module is disposed at a rear of the bicycle (20) and captures environmental information from a rear side of the bicycle, outputting an environment sensing signal. The display module is disposed at a front of the bicycle and is electrically connected to the environment sensing module to receive the environment sensing signal. The display module has a screen (121) that displays an image corresponding to the environment sensing signal. The light sensing module is disposed at the front of the bicycle and is electrically connected to the environment sensing module and/or the display module. The environment sensing module and/or the display module is operable in a normal mode or a night mode according to the light intensity sensing signal output by the light sensing module.

## Description

### CROSS-REFERENCE TO RELATED APPLICATION

This application claims priority to U.S. Provisional Application No. 63/729,787, filed on December 9, 2024 and Taiwan Application No. 114204293, filed on April 29, 2025. The entirety of the above-mentioned patent application is hereby incorporated by reference herein and made a part of this specification.

### FIELD OF THE DISCLOSURE

The present disclosure relates to a bicycle, and more particularly to an electronic rearview mirror system for a bicycle.

### BACKGROUND OF THE DISCLOSURE

Conventional bicycles generally are not equipped with rearview mirrors, which can readily give rise to safety concerns during riding. With advances in technology, many bicycles are now equipped with screens for displaying various data. Accordingly, a design that integrates an electronic rearview mirror has gradually become a new option for cyclists to enhance riding safety.

Existing bicycle electronic rearview mirrors mainly include a camera, a screen, and a battery, and are capable of providing a rider with a real-time rear view to enhance riding safety. The camera is provided with a night vision mode that can be activated through detection by a light sensor to ensure that clear images may be obtained even in low-light environments. However, current designs have a drawback in that when the light sensor is exposed to headlights of a following vehicle, it may incorrectly determine that ambient light is sufficient and cause the camera to fail to activate the night vision mode properly, thereby adversely affecting the camera performance.

Due to the existence of the misjudgment problem of the light sensor, a user may encounter unclear image display during riding at night. This not only reduces the practicality of the electronic rearview mirror, but may also affect the riding safety.

With the development of smart bicycle accessories, the application of electronic rearview mirrors will become increasingly widespread. Accordingly, improving the detection accuracy of the light sensor and enhancing the stability of the night vision function have become important issues to be addressed.

### SUMMARY OF THE DISCLOSURE

The present disclosure provides an electronic rearview mirror system applicable to a bicycle which is capable of preventing a night vision mode of the electronic rearview mirror system from being erroneously activated because of headlights of a following vehicle.

To achieve one, some, or all of the aforementioned purposes or other purposes, an embodiment of the disclosure provides an electronic rearview mirror system applicable to a bicycle. The electronic rearview mirror system includes an environment sensing module, a display module, and a light sensing module. The environment sensing module is disposed at a rear of the bicycle to capture an environment information from a rear side of the bicycle and to output an environment sensing signal according to the environment information. The display module is disposed at a front of the bicycle and electrically connected to the environment sensing module to receive the environment sensing signal. The display module includes a screen, and the screen is configured to display an image corresponding to the environmental sensing signal. The light sensing module is disposed at the front of the bicycle and electrically connected to the environment sensing module and/or the display module. The environment sensing module and/or the display module is adapted to be operated in a normal mode or a night mode, and is configured to switch between the normal mode and the night mode according to a light intensity sensing signal outputted from the light sensing module.

In an embodiment of the present disclosure, the environment sensing module includes an image capture module configured to capture an image from the rear side of the bicycle and output an image signal according to the image. Th environment sensing signal includes the image signal. In other embodiments, the image sensing module further includes a radar module configured to capture a radar echo signal corresponding to a plurality of objects from the rear side of the bicycle.

In an embodiment of the present disclosure, the display module and the light sensing module are disposed on a stem of the bicycle.

In an embodiment of the present disclosure, the light sensing module is integrated into a housing of the display module and disposed adjacent to the screen.

In an embodiment of the present disclosure, the light sensing module includes a sensing surface facing upward.

In an embodiment of the present disclosure, a normal axis of the sensing surface and a horizontal surface of a ground define an angle, and the angle is an acute angle.

In an embodiment of the present disclosure, the environment sensing module is disposed on a rear-end fixture component at the rear of the bicycle.

In an embodiment of the present disclosure, the rear-end fixture component includes a seat tube, a luggage rack, or a tail light of the bicycle.

To achieve the aforementioned objectives, the present disclosure provides a radar electronic rearview mirror system applicable to a bicycle. The bicycle includes a front adjacent to a front wheel and a rear adjacent to a rear wheel. The radar electronic rearview mirror system includes an environment sensing module, a display module, and a light sensing module. The environment sensing module is disposed at the rear of the bicycle and configured to capture an environment information from a rear side of the bicycle and to output an environment sensing signal according to the environment information. The display module is disposed at the front of the bicycle and electrically connected to the environment sensing module to receive the environment sensing signal. The display module includes a screen, and the screen is configured to display an image corresponding to the environment sensing signal. The light sensing module is disposed on the bicycle with a sensing surface of the light sensing module facing upward. The light sensing module is electrically connected to the environment sensing module and/or the display module. The environment sensing module and/or the display module is adapted to be operated in a normal mode or a night mode, and the environment sensing module or the display module is configured to switch between the normal mode and the night mode according to a light intensity sensing signal outputted from the light sensing module.

In the present disclosure, the light sensing module is disposed at the front of the bicycle to prevent headlights of a following vehicle from directly illuminating the light sensing module, thereby avoiding the environment sensing module or the display module from being erroneously triggered.

Other objectives, features and advantages of the disclosure will be further understood from the further technological features disclosed by the embodiments of the disclosure wherein there are shown and described preferred embodiments of this disclosure, simply by way of illustration of modes best suited to carry out the disclosure.

### BRIEF DESCRIPTION OF THE DRAWINGS

FIG. 1 is a schematic block diagram of an electronic rearview mirror system according to an embodiment of the present disclosure.
FIG. 2 is a schematic diagram showing an electronic rearview mirror system mounted on a bicycle according to an embodiment of the present disclosure.
FIG. 3 is a schematic diagram showing a configuration of a light sensing module according to an embodiment of the present disclosure.
FIG. 4 is a schematic block diagram of an electronic rearview mirror system according to another embodiment of the present disclosure.

### DETAILED DESCRIPTION OF PREFERRED EMBODIMENTS

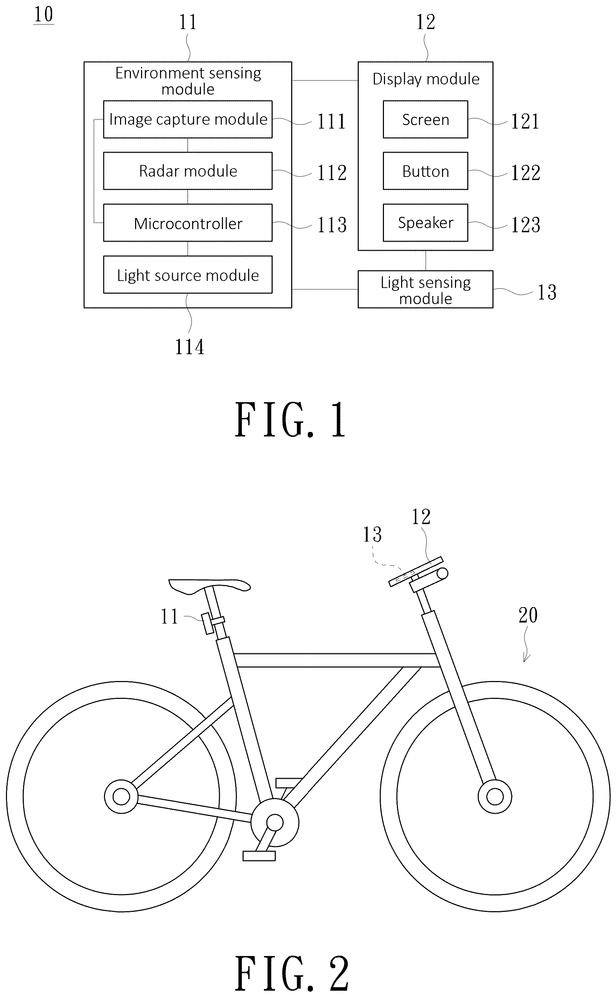

FIG. 1 is a schematic block diagram of an electronic rearview mirror system according to an embodiment of the present disclosure. FIG. 2 is a schematic diagram showing an electronic rearview mirror system mounted on a bicycle according to an embodiment of the present disclosure. As shown in FIG. 1 and FIG. 2, an electronic rearview mirror system 10 is mounted on a bicycle 20. The bicycle 20 includes a front and a rear. In the embodiment, the front includes, for example, but is not limited to, a top tube, a stem, or a handlebar. The rear includes, for example, but is not limited to, a rear triangle, a sear post, or a seat tube.

The electronic rearview mirror system 10 includes an environment sensing module 11, a display module 12, and a light sensing module 13. The environment sensing module 11 is disposed at the rear of the bicycle 20 to capture an environment information from a rear side of the bicycle and to output an environment sensing signal according to the environment information. The term "rear side" refers generally to the rear side relative to a rider of the bicycle 20 and is not intended to be a limitation. For the environment sensing module 11, if its sensing range excesses 180 degrees, it may also acquire information from lateral sides or even a front side of the rider. The display module 12 is disposed at the front of the bicycle 20 and electrically connected to the environment sensing module 11 to receive the environment sensing signal. The display module 12 also includes a screen 121 to display an image corresponding to the environment sensing signal. The light sensing module 13 is also disposed at the front of the bicycle 20 and configured to output a light intensity sensing signal to the environment sensing module 11 and the display module 12. In the embodiment, the environment sensing module 11 is mounted on a seat tube through a fixture component. In addition, a main operation axis of the environment sensing module 11 faces the rear side of the bicycle 20. The display module 12 and the light sensing module 13 are mounted on the stem through another fixture component.

As shown in FIG. 1, the environment sensing module 11 further includes an image capture module 111, a radar module 112, a microcontroller 113, a light source module 114. In the embodiment, the image capture module 111 may include, for example, but is not limited to, a lens, a sensor, and an image signal processor (ISP). The lens is configured to control light entry into the sensor and to affect its view angle, focal length, and aperture. The lens may further include technologies such as autofocus (AF), optical zoom, or optical image stabilization (OIS). The sensor (e.g., CMOS or CCD) converts optical signals passing through the lens into digital image signals, and determines image resolution, sensitivity, and dynamic range. The image signal processor adjusts image processing algorithms through software or firmware to perform operations such as white balance, noise reduction, high dynamic range (HDR) processing, and color correction.

The radar module 112 further includes a transmitter (TX), a receiver (RX), and a signal processing unit. The transmitter generates a radio frequency (RF) signal (e.g., 24 GHz, 77 GHz, 79 GHz) required for the radar through an RF signal generator, amplifies the RF signal by using a power amplifier (PA) to increase the sensing range, and transmits highfrequency electromagnetic waves into space through a transmitting antenna (TX antenna), such as a microstrip antenna, array antenna, or horn antenna. The receiver receives radar echo signals reflected from objects via a receiving antenna (RX antenna), amplifies the weak echo signals by using a low-noise amplifier (LNA) to enhance the signal-to-noise ratio (SNR), mixes the radar echo signals with a local oscillator (LO) signal via a mixer, and converts the mixed signals into a lower-frequency intermediate frequency (IF) signals. The signal processing unit includes an analog-to-digital converter (ADC) and a digital signal processor (DSP), which are respectively used to convert the analog radar signals into a digital signals and to analyze the radar echo signals using algorithms such as demodulation, filtering, and Fast Fourier Transform (FFT) to extract target information such as distance, speed, and angle.

The microcontroller 113 is electrically connected to the image capture module 111, the radar module 112, and the light source module 114, respectively, to control the operations of all modules. For example, the microcontroller 113 may dynamically control a radar beam direction by adjusting a phase of each antenna in an antenna array, thereby enhancing the sensing range and directional resolution. The microcontroller 113 also controls the power supply required by each module. The light source module 114 is disposed adjacent to the image capture module 111, and may include a fill light and an infrared light, which are used to assist the image capture module 111 to operate in a low-light environment or for the night vision function.

The display module 12 is configured to receive the environment sensing signal, which includes the aforementioned image signal and the radar echo signal. In addition to the screen 121, the display module 12 may further include a plurality of buttons 122 and a speaker 123. As mentioned above, the screen 121 is used to display various types of information, including the image corresponding to the environment sensing signal, object position and distance information, and the like. The buttons 122 may be used to switch functions, display information, or adjust settings. The buttons 122 may be physical buttons or virtual touch buttons displayed on the screen 121. The speaker 123 may be configured to receive signals and output voice or warning sounds. In addition, the display module 12 may further include a microcontroller or a microprocessor to process signals from the environment sensing module 11 and the light sensing module 13.

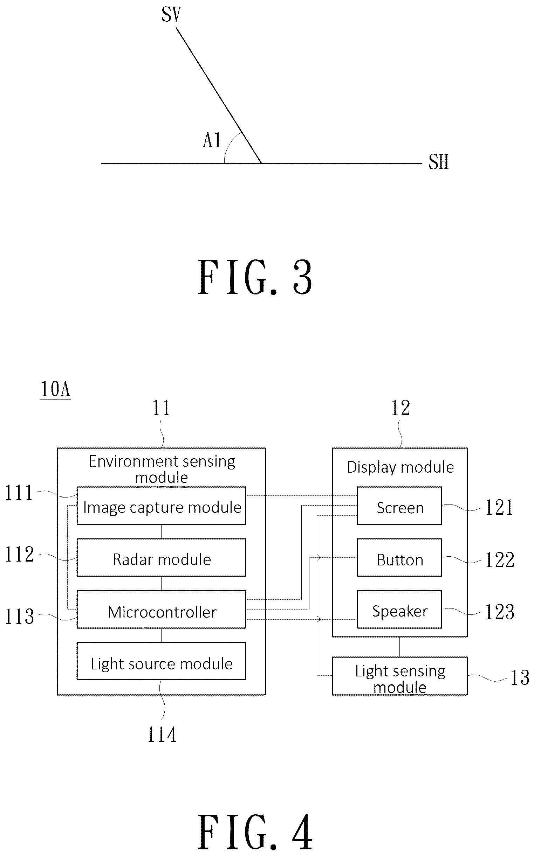

The light sensing module 13 includes an ambient light sensor configured to generate a corresponding light intensity sensing signal based on an amount of incident light entering the ambient light sensor. The light sensing module 13, which includes a sensing surface for detecting a light intensity, is mounted on the bicycle 20 with the sensing surface facing upward. Specifically, please refer to FIG. 3 which is a schematic diagram showing a configuration of a light sensing module according to an embodiment of the present disclosure. As shown in FIG. 3, a normal axis SV of the sensing surface of the light sensing module 13 and a horizontal surface SH of a ground define an angle A1 therebetween, and the angle A1 is an acute angle between 30 degrees and 90 degrees. Since the light sensing module 13 is mounted on the stem, and the sensing surface and the horizontal surface of the ground form an angle, it prevents headlights of other vehicles from interfering the sensing accuracy. It is noted that the angle A1 is not limited to a direction facing the rider, but may be oriented in any direction relative to the horizontal surface of the ground. Furthermore, the light sensing module 13 may be disposed in any position of the bicycle 20 if the sensing surface faces upward.

In the embodiment, the environment sensing module 11 and the display module 12 may be operated in a normal mode or a night mode. The operation modes may be switched according to the light intensity signal outputted from the light sensing module 13. For example, when the light intensity of the incident light on the light sensing module 13 exceeds a predetermined intensity threshold, a corresponding light intensity signal is outputted to cause the environment sensing module 11 and the display module 12 to be operated in the normal mode. When the light intensity of the incident light on the light sensing module 13 is below the intensity threshold, another corresponding light intensity signal is outputted to cause the environment sensing module 11 and the display module 12 to be operated in the night mode. In the so-called "night mode", the image capture module 111 may activate an LED fill light or an infrared light, and the display module 12 may also reduce the display brightness such that an image displayed on the screen 131 of the display module 12 is easier for the rider to recognize.

Please refer to FIG. 4, which is a schematic block diagram of an electronic rearview mirror system according to another embodiment of the present disclosure. In the embodiment, an electronic rearview mirror system 10A is provided. A main difference between the electronic rearview mirror system 10A and the aforementioned electronic rearview mirror system 10 is that the environment sensing module 11 and the display module 12 utilize the same microcontroller 113. In the embodiment, the screen 121 is electrically connected to the image capture module 111, the microcontroller 113, and the light sensing module 13, respectively. The buttons 122 and the speaker 123 are also electrically connected to the microcontroller 113. In addition, the framework of the electronic rearview mirror system 10A is configured to allow the image signal from the image capture module 111 to be directly transmitted to the screen 121 for real-time display.

It is noted that, in the embodiment, the light sensing module 13 may be integrated into a housing of the display module 12 and disposed adjacent to the screen 121. However, the disclosure is not limited thereto. The light sensing module 13 may be integrated to any position of the display module 12.

On the other hand, in the embodiment, the image capture module 111 and the display module 12 may stay in a sleep mode under normal conditions, and are awaken only when the radar module 113 detects an object approaching in the surrounding area and there is a need to alert or warn the rider. As a result, a power consumption of the electronic rearview mirror system can be reduced, thereby achieving an energy-saving effect.

It is noted that the electronic rearview mirror system of the disclosure may further include an image storage unit, an image processing unit, and an image control unit. The image storage unit is adapted to store the images captured by the image capture module 111. The image processing unit is adapted to adjust the image parameters of the images captured by the image capture module 111, such as color, brightness, contrast, and white balance, so that images suitable for viewing may be displayed on the screen 121. The image control unit may be adapted to control image playback. For example, the images captured by the image capture module 111 may be displayed on the screen 121 in real-time, or alternatively, by playing or replaying the stored images from the image storage unit.

In summary, the electronic rearview mirror system of the disclosure, which is applicable to a bicycle, separates the light sensing module and the camera, and places the light sensing module at front of the bicycle in a facing-upward orientation, thereby effectively avoiding the illumination of surrounding headlights, particularly from the rear side, and enhancing the performance in the night mode or night vision mode. Furthermore, the system is activated only when the radar module detects an approaching object that needs a warning, thereby significantly reducing the power consumption and achieving an effect energy-saving.

While the disclosure has been described in terms of what is presently considered to be the most practical and preferred embodiments, it is to be understood that the disclosure needs not be limited to the disclosed embodiment. On the contrary, it is intended to cover various modifications and similar arrangements included within the spirit and scope of the appended claims which are to be accorded with the broadest interpretation so as to encompass all such modifications and similar structures.

## Claims

1. A radar electronic rearview mirror system applicable to a bicycle (20), **characterized in that** the bicycle comprising a front adjacent to a front wheel and a rear adjacent to a rear wheel, the radar electronic rearview mirror system comprising:
an environment sensing module (11), disposed at the rear of the bicycle to capture an environment information from a rear side of the bicycle and to output an environment sensing signal;
a display module (12), disposed at the front of the bicycle and electrically connected to the environment sensing module to receive the environment sensing signal, wherein the display module comprises a screen (121), and the screen is configured to display an image corresponding to the environmental sensing signal; and
a light sensing module (13), disposed at the front of the bicycle and electrically connected to the environment sensing module and/or the display module;
wherein the environment sensing module and/or the display module is adapted to be operated in a normal mode or a night mode, and is configured to switch between the normal mode and the night mode according to a light intensity sensing signal outputted from the light sensing module.

2. The radar electronic rearview mirror system according to claim 1, **characterized in that** the environment sensing module comprises an image capture module (111) configured to capture an image from the rear side of the bicycle and output an image signal according to the image, and the environment sensing signal comprises the image signal.

3. The radar electronic rearview mirror system according to claim 1, **characterized in that** the display module and the light sensing module are disposed on a stem of the bicycle.

4. The radar electronic rearview mirror system according to claim 3, **characterized in that** the light sensing module is integrated in a housing of the display module and disposed adjacent to the screen.

5. The radar electronic rearview mirror system according to claim 1, **characterized in that** the light sensing module comprises a sensing surface facing upward.

6. The radar electronic rearview mirror system according to claim 5, **characterized in that** a normal axis of the sensing surface and a horizontal surface of a ground define an angle (A1), and the angle is an acute angle.

7. The radar electronic rearview mirror system according to claim 1, **characterized in that** the environment sensing module is disposed on a seat tube, a luggage rack, or a tail light at the rear of the bicycle.

8. A radar electronic rearview mirror system applicable to a bicycle (20), **characterized in that** the bicycle comprising a front adjacent to a front wheel and a rear adjacent to a rear wheel, the radar electronic rearview mirror system comprising:
an environment sensing module (11), disposed at the rear of the bicycle to capture an environment information from a rear side of the bicycle and to output an environment sensing signal;
a display module (12), disposed at the front of the bicycle and electrically connected to the environment sensing module to receive the environment sensing signal, wherein the display module comprises a screen (121), and the screen is configured to display an image corresponding to the environment sensing signal; and
a light sensing module (13), disposed on the bicycle with a sensing surface of the light sensing module facing upward, wherein the light sensing module is electrically connected to the environment sensing module and/or the display module;
wherein the environment sensing module and/or the display module is adapted to be operated in a normal mode or a night mode, and the environment sensing module and/or the display module is configured to switch between the normal mode and the night mode according to a light intensity sensing signal outputted from the light sensing module.

9. The radar electronic rearview mirror system according to claim 8, **characterized in that** a normal axis of the sensing surface and a horizontal surface of a ground define an angle (A1), and the angle is an acute angle.

10. The radar electronic rearview mirror system according to claim 8, **characterized in that** the environment sensing module comprises an image capture module (111) to capture an image from the rear side of the bicycle and output an image signal according to the image, and the environment sensing signal comprises the image signal.
